# EUROPÄISCHE PATENTSCHRIFT

(11) **EP 0 958 945 B1**
(45) Veröffentlichungstag und Bekanntmachung des Hinweises auf die Patenterteilung: **22.10.2003**
(21) Anmeldenummer: 99109496.2
(22) Anmeldetag: 12.05.1999
(51) Int. Cl.: B60C 11/12

(54) **Fahrzeugreifen**
Vehicle tyre
Bandage pneumatique pour véhicule

(30) Priorität: 20.05.1998 DE 19822573
(43) Veröffentlichungstag der Anmeldung: 24.11.1999
(73) Patentinhaber: Continental Aktiengesellschaft, 30165 Hannover (DE)
(72) Erfinder: Rodewald, Helmut, 31249 Rötzum (DE)

(56) Entgegenhaltungen:
- EP-A- 0 618 091
- EP-A- 0 618 092
- CH-A- 204 420
- PATENT ABSTRACTS OF JAPAN vol. 017, no. 598 (M-1504), 2. November 1993 (1993-11-02) & JP 05 178028 A (TOYO TIRE & RUBBER CO LTD), 20. Juli 1993 (1993-07-20)
- PATENT ABSTRACTS OF JAPAN vol. 015, no. 307 (M-1143), 6. August 1991 (1991-08-06) & JP 03 112705 A (BRIDGESTONE CORP), 14. Mai 1991 (1991-05-14)

## Beschreibung

Die gegenständliche Erfindung betrifft einen Fahrzeugreifen, insbesondere für den Einsatz unter winterlichen Fahrbedingungen, mit einem laufrichtungsgebunden gestalteten Laufstreifenprofil mit Profilelementen, wie Profilblöcken, die zumindest zum Teil von Nuten, Umfangsnuten und auch von Quernuten, begrenzt sind und die jeweils eine Vielzahl von Feineinschnitten, die jeweils mit beiden Endabschnitten in eine Nut münden, aufweisen.

Fahrzeugluftreifen, die für den Einsatz unter winterlichen Fahrbedingungen besonders geeignet sind, weisen im allgemeinen Profilelemente auf, die mit einer Vielzahl von Feineinschnitten versehen sind. Es ist bekannt, daß solche Feineinschnitte unerläßlich sind, um gute Griffeigenschaften des Reifens auf schneeigem oder eisigem Untergrund, vor allem unter unterschiedlichen Beanspruchungen, sei es beim Bremsen oder beim Beschleunigen, sicherzustellen. Es ist auch bekannt, daß in diesem Zusammenhang der Biegesteifigkeit bzw. dem Steifigkeitsverhalten der Profilelemente unter unterschiedlichen Beanspruchungen bzw. Beanspruchungsrichtungen eine größere Bedeutung zukommt.

Um die Griffeigenschaften und die Biegesteifigkeit von Profilelementen zu beeinflussen, sind auch schon verschiedene Maßnahmen getroffen oder vorgeschlagen worden. Oft geht es bei diesen bekannten Lösungen oder Lösungsvorschlägen darum, bei guten Griffeigenschaften des Profiles eine hohe Biegesteifigkeit der Profilelemente sowohl in Umfangs- als auch in Querrichtung zu gewährleisten. Mit einer solchen Lösung befaßt sich die EP 0 618 091 A1, die ein Laufstreifenprofil offenbart, dessen Profilblöcke mit einer Vielzahl von vom Zentralbereich des jeweiligen Profilblockes strahlenförmig ausgehenden und bis zu den Profilblockkanten verlaufenden Feineinschnitten versehen sind. Eine andere Lösung ist aus der EP 0 618 092 A1 (die dem Oberbegriff des Anspruchs 1 entspricht) bekannt, wo in Profilelementen Feineinschnitte angeordnet werden, die durch Einzelelemente mit einer zumindest annähernd Doppelt-T-Träger-förmigen Gestalt gebildet sind. Auch hier geht es darum, sowohl in Umfangs- als auch in Axialrichtung eine hohe Biegesteifigkeit der Profilelemente mit solchen Feineinschnitten zu gewährleisten.

Es ist bekannt, daß die Lamellenfeineinschnitte in einem Laufstreifenprofil, je nach ihrer Anordnung und je nach den gerade auftretenden Beanspruchungen, die Profilelementsteifigkeit und somit andere Eigenschaften, wie das Verhalten beim Bremsen oder Beschleunigen, beeinflussen bzw. ändern. Solche Beeinflussungen können gezielt am besten bei solchen Laufstreifenprofilen vorgenommen werden, die laufrichtungsgebunden gestaltet sind, wo also der Reifen in einer ganz bestimmten Richtung bezüglich der normalen Fahrtrichtung des Fahrzeuges abrollt.

Hier setzt nun die Erfindung ein, deren Aufgabe darin besteht, eine in obigem Sinn besonders vorteilhafte Ausgestaltung und Anordnung von Lamellenfeineinschnitten in Profilelementen eines laufrichtungsgebunden gestalteten Laufstreifenprofiles vorzuschlagen.

Gelöst wird die gestellte Aufgabe erfindungsgemäß dadurch, daß Profilelemente mit zumindest paarweise - einer den anderen umlaufend - angeordneten Feineinschnitten vorgesehen sind, deren frei endenden Abschnitte jeweils in dieselbe Quernut an der, in Abrollrichtung des Reifens betrachtet, auslaufenden Kante des Profilelementes einmünden, und welche Feineinschnitte zumindest einen in bzw. im wesentlichen in Reifenquerrichtung orientierten Feineinschnittabschnitt aufweisen.

In Abhängigkeit von der Beanspruchungsrichtung besitzen erfindungsgemäß angeordnete und ausgeführte Feineinschnitte somit eine unterschiedliche Wirkungsweise. Unter Traktionsbeanspruchung können sie im Bereich ihrer in Profilquerrichtung verlaufenden Abschnitte gut öffnen, da ihre in Umfangsrichtung orientierten Abschnitte diesbezügliche Deformationen gut zulassen. Beim Bremsen tritt ein eine hohe Profilelementsteifigkeit gewährleistender Kraftschluß in diesen Abschnitten ein. Diese genannten Effekte sind besonders auf schneeigem, eisigem oder nassem Untergrund von Vorteil.

Bei einer bevorzugten Ausführungsform der Erfindung beträgt die Gesamtanzahl der Feineinschnitte pro Profilelement, vom innersten bis zum äußersten, bis zu vier. Dies ist günstig, um eine zu starke Aufweichung des Profilelementes durch Feineinschnitte zu verhindern.

Bei einer bevorzugten Ausführungsform der Erfindung wird die Ausgestaltung der in die Quernuten mündenden Feineinschnitte so getroffen, daß diese zumindest im wesentlichen entlang eines U verlaufen. Diese Ausführung ist vor allem für Profilelemente günstig, die parallelogrammförmige oder im wesentlichen parallelogrammförmig gestaltete Profilblöcke sind. Mit solchen Feineinschnitten läßt sich bei diesen Profilblöcken in besonders einfacher Weise die erwünschte Beeinflussung der Profilblocksteifigkeit vornehmen.

Bei einer weiteren Ausführungsvariante der Erfindung kann der innerste Feineinschnitt ein in sich geschlossener Feineinschnitt sein. Auch durch diese Maßnahme wird in besonderer Weise Einfluß auf die Profilelementsteifigkeit genommen.

Dabei ist es ferner von Vorteil, wenn die Feineinschnitte in einer zumindest im wesentlichen gleichmäßigen Anordnung im Profilelement verteilt sind. Durch diese Maßnahme wird ein gleichmäßiger Laufstreifenabrieb unterstützt.

Eine weitere Maßnahme, die für einen gleichmäßigen Laufstreifenabrieb von Vorteil ist, besteht darin, daß die innerhalb eines Profilelementes angeordneten Feineinschnitte parallel oder im wesentlichen parallel zueinander verlaufen. Diese Maßnahme hat zudem einen günstigen Einfluß auf das mit der erfindungsgemäßen Feineinschnittanordnung erzielbare Steifigkeitsverhalten der Profilelemente.

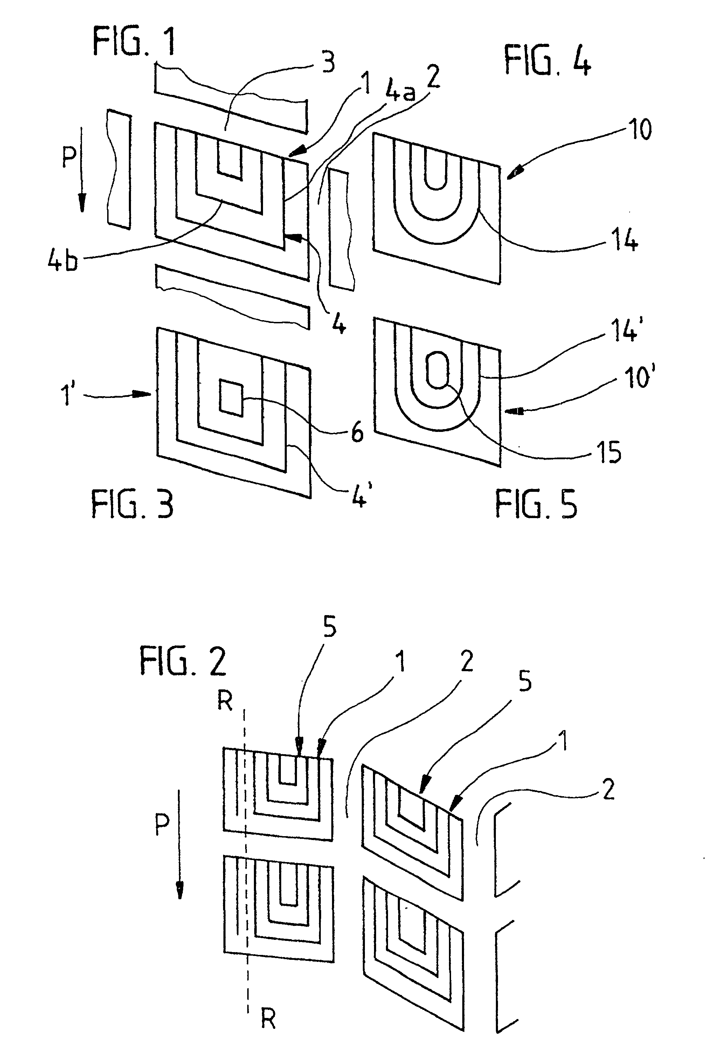

Weitere Merkmale, Vorteile und Einzelheiten der Erfindung werden nun anhand der Zeichnung, die mehrere Ausführungsbeispiele in schematischer Darstellung zeigt, näher beschrieben. Dabei zeigen: Fig. 1 eine Draufsicht auf einen hier parallelogrammförmig gestalteten Profilblock und die diesen unmittelbar benachbarten Profilbereiche eines Laufstreifenprofiles, Fig. 2 eine Draufsicht auf eine Teilabwicklung eines Laufstreifenprofiles, welches Profilblöcke enthält, die gemäß Fig. 1 gestaltet sind und die Fig. 3, 4 und 5 weitere Ausführungsformen der Erfindung, ebenfalls anhand von Draufsichten auf parallelogrammförmige Profilblöcke.

Der in Fig. 1 dargestellte und in Draufsicht eine etwa parallelogrammförmige Grundgestalt besitzende Profilblock 1 kann im Laufstreifenprofil eines Fahrzeugreifens derart untergebracht sein, daß er, wie es Fig. 1 zeigt, allseits von Nuten 2,3 umgeben ist. Dabei sind die Nuten 2 in Umfangsrichtung verlaufende, den Profilblock 1 in Querrichtung von benachbarten Profilstrukturen trennende Nuten, die Nuten 3 sind sogenannte Quernuten, die die in Umfangsrichtung aufeinander folgenden Profilblöcke, von welchem in Fig. 1 die jeweils zum dargestellten Profilblock 1 unmittelbar benachbarten eingezeichnet sind, voneinander trennen.

Der Profilblock 1 ist durch eine Anzahl von Feineinschnitten 4 strukturiert. Dabei wird im Rahmen der gegenständlichen Erfindung unter einem Feineinschnitt grundsätzlich ein Einschnitt einer Breite von 0,3 - 1 mm, insbesondere von 0,3 bis 0,6 mm, verstanden, dessen Tiefe der sonstigen Profiltiefe entsprechen kann, die üblicherweise 8 mm beträgt, der jedoch auch mit variierender Tiefe - dabei kann die Tiefe eines einzelnen Feineinschnittes über dessen Erstreckung variieren oder es können innerhalb eines einzelnen Profilblockes Feineinschnitte unterschiedlicher Tiefe vorgesehen werden - ausgeführt sein kann.

Im Profilblock 1 sind nun drei in Draufsicht im wesentlichen eckig-U-förmig verlaufende Feineinschnitte 4 vorgesehen, die unterschiedliche Größe besitzen und so angeordnet sind, daß ein innen liegender Feineinschnitt 4, ein diesen von außen umlaufender und ein weiterer, beide Feineinschnitte 4 von außen umlaufender Feineinschnitt 4 vorgesehen sind. Jeder Feineinschnitt 4 setzt sich aus zwei zueinander zumindest im wesentlichen parallel verlaufenden Feineinschnittschenkeln 4a, die alle jeweils in dieselbe Quernut 3 einmünden, und jeweils aus einem diese Schenkel 4a verbindenden Feineinschnittschenkel 4b zusammen.

Die drei eckig-U-förmig verlaufenden Feineinschnitte 4 sind im Profilblock 1 auf eine im wesentlichen gleichmäßige Art verteilt, so daß sich ihre Abstände untereinander und der Abstand des äußersten Feineinschnittes 4 zu den Profilblockkanten wenig unterscheiden.

Bei einem parallelogrammförmigen Profilblock 1, der, wie dargestellt, zwei Profilblockkanten besitzt, die in der Umfangsrichtung des Laufstreifenprofiles ausgerichtet sind, und zwei, die unter einem spitzen Winkel zur Profilquerrichtung verlaufen, sind die in eine Quernut 3 mündenden Feineinschnittschenkel 4a parallel zu den in Umfangsrichtung verlaufenden Blockkanten und die verbindenden Schenkel 4b parallel zu den anderen Kanten des Profilblockes 1 ausgerichtet und verlaufen somit wie die Quernuten 3 nicht exakt in Querrichtung, sondern gegenüber dieser ebenfalls unter einem spitzen Winkel.

Für die Wirkungsweise dieser Feineinschnitte 4 ist es nun von Bedeutung, welche Orientierung die Feineinschnitte 4 zur Abrollrichtung des Reifens bzw. zur Fahrtrichtung des Fahrzeuges haben. Der Pfeil P in Fig. 1 und Fig. 2 verdeutlicht die Abrollrichtung des Reifens vom Untergrund her gesehen, und es ist ersichtlich, daß die Anordnung der Feineinschnitte 4 im Profilblock 1 so getroffen wird, daß die in die Quernuten 3 einmündenden Feineinschnittschenkel 4a an der auslaufenden Kante des Profilblocks 1 münden. Die einlaufende Kante des Profilblockes 1, welche jene ist, die beim Abrollen des Reifen zuerst mit dem Untergrund in Berührung tritt, ist somit auch jene, zu dem der verbindende Schenkel 4b des am weitesten außen angeordneten Feineinschnittes 4 benachbart verläuft. Die Anordnung der erfindungsgemäß vorgesehenen Feineinschnitte 4 erfolgt daher in Laufstreifenprofilen, die sogenannte laufrichtungsgebundene Profile sind.

Fig. 2 zeigt die Draufsicht auf eine Teilabwicklung eines Laufstreifenprofiles, welches sich aus vier in Umfangsrichtung verlaufenden und durch Umfangsnuten 2 voneinander getrennten Blockreihen 5 zusammensetzt, deren Profilblöcke 1 mit jener Feineinschnittstruktur versehen sind, die bei dem in Fig. 1 dargestellten Profilblock 1 eingezeichnet ist. Bei den beiden schulterseitig verlaufenden Blockreihen 5 ist dabei die erfindungsgemäße Anordnung und Ausgestaltung der Feineinschnitte 4 in jenem Bereich getroffen, wo der Laufstreifen bzw. Reifen mit dem Untergrund im Normalbetrieb Kontakt hat. Dies wird durch die strichlierten Linien R verdeutlicht, die die Ränder der sogenannte Latschbreite des Reifens versinnbildlichen.

Es gibt nun eine Anzahl weiterer Möglichkeiten, erfindungsgemäß gestaltete Feineinschnitte auszuführen und anzuordnen. Beispiele solcher Möglichkeiten zeigen die Figuren 3 bis 5, wo jeweils ein Profilblock in zu Fig. 1 analoger Ausführung in Draufsicht dargestellt ist.

Der Profilblock 1' gemäß Fig. 3 ist mit zwei eckig-U-förmig verlaufenden Feineinschnitten 4' und anstelle eines dritten innersten U-förmigen Feineinschnittes mit einem in sich geschlossenen, viereckigen Feineinschnitt 6 versehen. In Draufsicht betrachtet, besitzt der Feineinschnitt 6 einen Verlauf entlang eines Parallelogramms mit jeweils zwei zu den Kanten des Profilblockes 1' parallel oder im wesentlichen parallel verlaufenden Abschnitten.

Fig. 4 zeigt eine Ausführungsform eines Profilblockes 10, wo anstelle des in Fig. 1 gezeigten eckig-U-förmigen ein rund-U-förmiger Verlauf für die Feineinschnitte 14 gewählt ist. Die gegenseitige Anordnung der ineinander verlaufenden Feineinschnitte 14 ist auch hier so getroffen, daß diese im wesentlichen parallel zueinander verlaufen.

Bei der Ausführungsform gemäß Fig. 5 ist ebenfalls ein Profilblock 10' mit zwei rund-U-förmig verlaufenden Feineinschnitten 14' dargestellt, von welchem einer den anderen umläuft. Anstelle eines innersten, gleichermaßen ausgestalteten Feineinschnittes ist hier, analog zur Ausführungsform gemäß Fig. 3, ein in sich geschlossener Feineinschnitt 15 vorgesehen, der bei diesem Ausführungsbeispiel entlang einer Ellipse bzw. einem Oval verlaufend ausgestaltet ist.

Laufstreifenprofile, die mit Profilelementen mit der Feineinschnittausgestaltung gemäß Fig. 3 bis Fig. 5 versehen werden, werden ebenfalls laufrichtungsgebunden gestaltet. Das heißt demnach, daß die freien Enden bzw. Endabschnitte der Feineinschnitte 4', 14, 14' an der auslaufenden Kante des Profilblockes 1', 10, 10' in die bei diesen Ausführungsbeispielen nicht dargestellten Quernuten münden.

Die erfindungsgemäß gestalteten und erfindungsgemäß in Abstimmung mit der Abrollrichtung des Reifens angeordneten Feineinschnitte sind, wie bereits erwähnt, besonders vorteilhaft bei Reifen einsetzbar, die unter winterlichen Fahrbedingungen gefahren werden, da die erfindungsgemäßen Feineinschnitte in Abhängigkeit von der Beanspruchungsrichtung die Profilblocksteifigkeit beeinflussen. Durch die erfindungsgemäße Ausgestaltung und Anordnung der Feineinschnitte zeigen die Profilelemente beim Bremsen durch den eintretenden Kraftschluß zwischen den Feineinschnitten eine hohe Steifigkeit. Bei Traktion können sich die Feineinschnitte im Bereich der verbindenden Abschnitte bzw. Schenkel besonders gut öffnen, da die in die Quernuten mündenden Schenkel bzw. Abschnitte eine Nachgiebigkeit des Profilblockes in Umfangsrichtung zulassen. Dieses Verhalten ist gerade auf winterlichen Fahrbahnen, insbesondere auf Schnee oder Eis, besonders vorteilhaft.

Grundsätzlich können im Rahmen der gegenständlichen Erfindung auch von der geschilderten und dargestellten U-Form abweichende Feineinschnitt-Ausgestaltungen vorgesehen werden. Wesentlich ist nur, daß jeder Feineinschnitt mit seinen freien Abschnitten, die zumindest im wesentlichen in Umfangsrichtung verlaufen, an auslaufenden Kanten in Quernuten oder dergleichen münden, und daß die Feineinschnitte auch zumindest einen in Profilquerrichtung orientierten Abschnitt besitzen.

Die Wirkungsweise der Feineinschnitte kann durch eine Anzahl von Detailmaßnahmen weiter beeinflußt werden. Wie in den Zeichnungsfiguren dargestellt, können die in die Quernuten mündenden Bereiche bzw. Abschnitte der Feineinschnitte untereinander und auch zu den seitlichen Blockkanten zumindest im wesentlich gleich beabstandet sein. Hier können die Abstände jedoch auch variiert werden. Wie dargestellt, ist es ferner günstig, wenn bezüglich des U-Bogens bzw. des verbindenden Abschnittes der einander umlaufenden Feineinschnitte ebenfalls zumindest im wesentlichen gleiche Abschnitte gewählt werden, die jedoch mit den Abständen der in die Quernuten einmündenden Bereiche bzw. Abschnitte der Feineinschnitte nicht übereinstimmen müssen. Von der Anzahl der Feineinschnitte her werden entweder zumindest zwei erfindungsgemäß ausgeführte Feineinschnitte in einem Profilelement oder es werden zwei Feineinschnitte mit einem innerhalb von diesem angeordneten geschlossenen Feineinschnitt vorgesehen. Im allgemeinen wird eine Anzahl von zwei bis vier gleichermaßen gestalteten Feineinschnitten, gegebenenfalls in Kombination mit einem inneren geschlossenen Feineinschnitt, die günstigste sein.

Von ihrer Orientierung her können die erfindungsgemäß ausgestalteten Feineinschnitte in Profilelementen auch so angeordnet werden, daß ihre in Quernuten mündenden Schenkel bzw. Abschnitte, abweichend von den dargestellten Ausführungsformen, unter einem Winkel < 45° zur Umfangsrichtung verlaufen, wobei jedoch eine grundsätzliche Ausrichtung in Umfangsrichtung bevorzugt ist. Profilelemente mit erfindungsgemäß ausgeführten und angeordneten Feineinschnitten können ferner sowohl im Laufstreifenmittelbereich als auch in den Laufstreifenrandbereichen oder in beiden Bereichen gleichzeitig angeordnet werden. Die Anordnung der erfindungsgemäßen Feineinschnitte kann ferner auch in Profilelementen von Laufstreifenprofilen erfolgen, die nicht als Profilblöcke ausgestaltet sind, sondern beispielsweise in Form eines Laufstreifenbandes mit tiefen Quereinschnitten bzw. Sacknuten, wo die freien Abschnitte an der auslaufenden Kante münden, ausgeführt sind. Selbstverständlich ist auch eine Kombination erfindungsgemäßer Feineinschnitte mit anders gestalteten möglich.

## Patentansprüche

1. Fahrzeugreifen, insbesondere für den Einsatz unter winterlichen Fahrbedingungen, mit einem laufrichtungsgebunden gestalteten Laufstreifenprofil mit Profilelementen (1,1',10,10'), wie Profilblöcken, die zumindest zum Teil von Nuten, Umfangsnuten (2) und auch von Quernuten (3), begrenzt sind und die jeweils eine Vielzahl von Feineinschnitten (4,4',14,14'), die jeweils mit beiden freien Abschnitten in eine Nut münden, aufweisen, **dadurch gekennzeichnet, daß** Profilelemente (1, 1', 10, 10') mit zumindest paarweise - einer den anderen umlaufend - angeordneten Feineinschnitten (4, 4', 14, 14') vorgesehen sind, deren freie Abschnitte jeweils in dieselbe Quernut (3) an der, in Abrollrichtung des Reifens betrachtet, auslaufenden Kante des Profilelementes (1, 1', 10, 10') einmünden, welche Feineinschnitte (4, 4', 14, 14') zumindest einen in Reifenquerrichtung orientierten Feineinschnittabschnitt aufweisen.

2. Fahrzeugreifen nach Anspruch 1, **dadurch gekennzeichnet, daß** die Gesamtanzahl der Feineinschnitte (4, 4',14",14, 6', 15) pro Profilelement (1, 1', 10, 10'), vom innersten bis zum äußersten, bis zu vier beträgt.

3. Fahrzeugreifen nach Anspruch 1 oder Anspruch 2, **dadurch gekennzeichnet, daß** die in die Quernuten (3) mündenden Feineinschnitte (4, 4', 14, 14') zumindest im wesentlichen entlang eines U verlaufen.

4. Fahrzeugreifen nach einem der Ansprüche 1 bis 3, **dadurch gekennzeichnet, daß** der innerste Feineinschnitt (6, 15) ein in sich geschlossener Feineinschnitt ist.

5. Fahrzeugreifen nach einem der Ansprüche 1 bis 4, **dadurch gekennzeichnet, daß** die Feineinschnitte (4, 4', 14, 14', 6, 15) in einer zumindest im wesentlichen gleichmäßigen Anordnung im Profilelement (1, 1', 10, 10') verteilt sind.

6. Fahrzeugreifen nach einem der Ansprüche 1 bis 5, **dadurch gekennzeichnet, daß** die innerhalb eines Profilelementes (1, 1', 10, 10') angeordneten Feineinschnitte (4, 4', 14, 14', 6, 15) parallel oder im wesentlichen parallel zueinander verlaufen.

## Claims

1. Vehicle tyre, more especially for use in wintry travel conditions, said tyre having a tread strip profile, which is configured to be adapted to the direction of travel and has profile elements (1, 1', 10, 10'), such as profile blocks, which are defined at least partially by grooves, circumferential grooves (2) and also by transverse grooves (3), and which elements each have a plurality of fine incisions (4, 4', 14, 14'), which each terminate with both free portions in a groove, **characterised in that** profile elements (1, 1', 10, 10') are provided with fine incisions (4, 4', 14, 14'), which are disposed at least in pairs - one surrounding the other - the free portions of said incisions each terminating in the same transverse groove (3) on the trailing edge of the profile element (1, 1', 10, 10'), when viewed with respect to the direction of travel of the tyre, which fine incisions (4, 4', 14, 14') have at least one fine incision portion orientated in the transverse direction of the tyre.

2. Vehicle tyre according to claim 1, **characterised in that** the total number of fine incisions (4, 4', 14, 14', 6, 15) per profile element (1, 1', 10, 10'), from the innermost to the outermost, is up to four.

3. Vehicle tyre according to claim 1 or claim 2, **characterised in that** the fine incisions (4, 4', 14, 14'), which terminate in the transverse grooves (3), extend at least substantially along a "U".

4. Vehicle tyre according to one of claims 1 to 3, **characterised in that** the innermost fine incision (6, 15) is a fine incision which is closed upon itself.

5. Vehicle tyre according to one of claims 1 to 4, **characterised in that** the fine incisions (4, 4', 14, 14', 6, 15) are distributed in an at least substantially uniform disposition in the profile element (1, 1', 10, 10').

6. Vehicle tyre according to one of claims 1 to 5, **characterised in that** the fine incisions (4, 4', 14, 14', 6, 15), which are disposed internally of a profile element (1, 1', 10, 10'), extend parallel or substantially parallel to one another.

## Revendications

1. Pneumatique de véhicule, en particulier pour une utilisation dans des conditions hivernales de conduite, comprenant une sculpture de bande de roulement conformée de façon inhérente au sens de rotation, laquelle sculpture de bande de roulement comporte des éléments de sculpture (1, 1', 10, 10'), tels que des crampons de sculpture, qui sont limités, au moins en partie, par des rainures, des rainures périphériques (2) et également par des rainures transversales (3), et qui présentent à chaque fois une multiplicité d'entailles fines (4, 4', 14, 14') qui, par leurs deux parties libres, débouchent à chaque fois dans une rainure,
**caractérisé**
**en ce qu'**il est prévu des éléments de sculpture (1, 1', 10, 10') comportant des entailles fines (4, 4', 14, 14') au moins disposées par paires - de façon circulaire l'une par rapport à l'autre -, entailles fines dont les parties libres débouchent à chaque fois dans la même rainure transversale (3), sur le bord finissant - vu dans le sens de roulement du pneumatique - de l'élément de sculpture (1, 1', 10, 10'), lesquelles entailles fines (4, 4', 14, 14') présentent au moins une partie d'entaille fine orientée dans le sens transversal du pneumatique.

2. Pneumatique de véhicule selon la revendication 1, **caractérisé en ce que** la quantité totale d'entailles fines (4, 4', 14, 14', 6, 15), pour chaque élément de sculpture (1, 1', 10, 10'), va jusqu'à quatre, de l'entaille fine se trouvant le plus à l'intérieur à celle se trouvant le plus à l'extérieur.

3. Pneumatique de véhicule selon la revendication 1 ou la revendication 2, **caractérisé en ce que** les entailles fines (4, 4', 14, 14') débouchant dans les rainures transversales (3) s'étendent au moins pratiquement le long d'une forme en U.

4. Pneumatique de véhicule selon l'une des revendications 1 à 3, **caractérisé en ce que** l'entaille fine (6, 15) se trouvant le plus à l'intérieur est en soi une entaille fine fermée.

5. Pneumatique de véhicule selon l'une des revendications 1 à 4, **caractérisé en ce que** les entailles fines (4, 4', 14, 14', 6, 15) sont réparties, dans l'élément de sculpture (1, 1', 10, 10'), suivant un agencement au moins pratiquement uniforme.

6. Pneumatique de véhicule selon l'une des revendications 1 à 5, **caractérisé en ce que** les entailles fines (4, 4', 14, 14', 6, 15), disposées à l'intérieur d'un élément de sculpture (1, 1', 10, 10'), s'étendent de façon parallèle ou pratiquement parallèle entre elles.
